(19) **Europäisches Patentamt / European Patent Office / Office européen des brevets**

(11) **EP 4 626 011 A1**

(12) **EUROPEAN PATENT APPLICATION**

(43) Date of publication:
01.10.2025 Bulletin 2025/40

(21) Application number: 25161796.5

(22) Date of filing: 05.03.2025

(51) International Patent Classification (IPC):
$H04N\ 23/661$ (2023.01)    $H04N\ 23/663$ (2023.01)
$H04N\ 23/67$ (2023.01)    $H04N\ 23/69$ (2023.01)
$H04N\ 23/81$ (2023.01)

(52) Cooperative Patent Classification (CPC):
H04N 23/69; H04N 23/661; H04N 23/663;
H04N 23/67; H04N 23/81

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.03.2024 JP 2024055436

(71) Applicant: CANON KABUSHIKI KAISHA
Tokyo 146-8501 (JP)

(72) Inventors:
• TAKAHASHI, Makoto
  Tokyo (JP)
• SHIMOMURA, Kazuya
  Tokyo (JP)

(74) Representative: WESER & Kollegen
Patentanwälte PartmbB
Radeckestraße 43
81245 München (DE)

(54) **PROCESSING APPARATUS, IMAGE PICKUP APPARATUS, LENS APPARATUS, IMAGING SYSTEM, IMAGE PROCESSING APPARATUS, SYSTEM, PROCESSING METHOD, AND PROGRAM**

(57) A processing apparatus (2) includes a first acquiring unit (41) configured to acquire an imaging resolution and an output resolution, and a second acquiring unit (42) configured to acquire information on a focal length of an optical system and center position information on an image according to the imaging resolution and the output resolution.

FIG. 1

EP 4 626 011 A1

**Description**

BACKGROUND

Technical Field

The present disclosure relates to a processing apparatus, an image pickup apparatus, a lens apparatus, an imaging system, an image processing apparatus, a system, a processing method, and a program.

Description of Related Art

Visual effects (VFX), which is a combination technique of computer graphics (CG) space (virtual video) and real space (real-life video) have conventionally been known. Highly accurate distortion correction has recently been demanded to improve the quality of a combined image, and various proposals have been made to meet such demands (see Japanese Patent Application Laid-Open Nos. 2008-295097 and 2023-176702).

SUMMARY

The present disclosure in its first aspect provides a processing apparatus as specified in claims 1 to 10.
The present disclosure in its second aspect provides an image pickup apparatus as specified in claims 11 to 13.
The present disclosure in its third aspect provides a lens apparatus as specified in claim 14.
The present disclosure in its fourth aspect provides an imaging system as specified in claim 15.
The present disclosure in its fifth aspect provides an image processing apparatus as specified in claim 16.
The present disclosure in its sixth aspect provides a system as specified in claim 17.
The present disclosure in its seventh aspect provides a processing method as specified in claim 18.
The present disclosure in its eighth aspect provides a program as specified in claim 19.
Further features of various embodiments of the disclosure will become apparent from the following description of embodiments with reference to the attached drawings.

BRIEF DESCRIPTION OF THE DRAWINGS

FIG. 1 is a configuration diagram of a VFX system according to this embodiment of the present disclosure.
FIG. 2 is a conceptual diagram of distortion correction.
FIG. 3 is a conceptual diagram of an imaging resolution and an output resolution.
FIG. 4 is a conceptual diagram in a case where a relationship between focal lengths per pitch and distortion correcting data is improper.
FIG. 5 is a conceptual diagram in a case where a relationship between image center coordinates and distortion correcting data is improper.
FIG. 6 is a conceptual diagram of calculation processing.
FIG. 7 is a flowchart illustrating processing on distortion correcting information in Example 1.
FIG. 8 is a schematic diagram of a resolution in Example 1.
FIG. 9 is a flowchart illustrating processing on distortion correcting information in Example 2.
FIG. 10 is a flowchart illustrating processing on distortion correcting information in Example 3.

DETAILED DESCRIPTION

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

Referring now to the accompanying drawings, a detailed description of embodiments according to the disclosure will be given. Corresponding elements in respective figures will be designated by the same reference numerals, and a duplicate description thereof will be omitted.

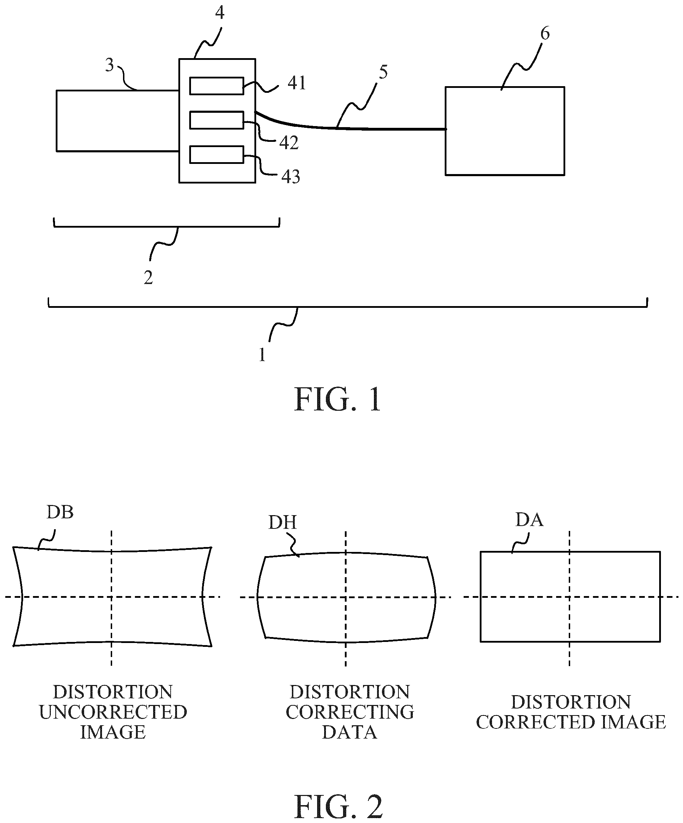

FIG. 1 is a configuration diagram of a VFX system 1 according to this embodiment of the present disclosure. The VFX system 1 includes an imaging system 2 and an image processing system 6. The imaging system 2 includes a lens (lens apparatus) 3 and an image pickup apparatus 4. In this embodiment, the lens 3 is attachable to and detachable from the image pickup apparatus 4, but may be integrated with the image pickup apparatus 4.

The lens 3 includes an unillustrated optical system. The optical system includes at least one imaging lens and forms an object image on an imaging surface of an image sensor. The optical system may include various optical elements such as a prism, or may include a zoom lens, a focus lens, etc.

The image pickup apparatus 4 includes an unillustrated image sensor that photoelectrically converts the optical image formed by the optical system. The image sensor includes, for example, a Charge Coupled Device (CCD) image sensor or a Complementary MOS (CMOS) image sensor, and outputs the object image formed on the imaging surface.

The image pickup apparatus 4 includes a first acquiring unit 41, a second acquiring unit 42, and a transmitter 43. The first acquiring unit 41 acquires the imaging resolution and the output resolution. The imaging resolution is the resolution of the image acquired by the image sensor (can be set arbitrarily as long as it is equal to or lower than the maximum resolution of the image sensor), and the output resolution is the resolution of the image output by the imaging system 2. In this embodiment, the first acquiring unit acquires focal length information and distortion information. The focal length information and distortion information are acquired from the lens 3 in a case where the lens 3 is attachable to and detachable from the image pickup apparatus 4, and may be acquired from an unillustrated memory provided in the imaging system 2 in a case where the lens 3 is integrated with the image pickup apparatus 4. The second acquiring unit 42 acquires information on the focal length of the optical system (focal length for pixel pitch) and center position information on the image (image center coordinates) according to the imaging resolution and the output resolution. The transmitter 43 transmits (outputs) the information on the focal length and the image center coordinates acquired by the second acquiring unit 42 to an external device (the image processing system 6 in the present embodiment). In this embodiment, the transmitter 43 transmits the distortion information to the external device. In this embodiment, the information from the transmitter 43 is transmitted to the image processing system 6 via a cable 5 (by wired communication), but may be transmitted by wireless communication.

In this embodiment, the first acquiring unit 41 and the second acquiring unit 42 are provided in the image pickup apparatus 4, but the present disclosure is not limited to this example. They may be provided in the lens 3 or the image processing system 6, or in another processing apparatus. In a case where they are provided in the lens 3 or the processing apparatus, the transmitter 43 may also be provided.

The image processing system 6 includes a PC and processing software. The PC includes an acquiring unit configured to acquire images captured by the imaging system 2 and imaging information, and a processing unit configured to perform processing such as VFX combination etc. using the information acquired by the acquiring unit. The processing software that performs the VFX combination generally performs processing in accordance with the OpenCV method for distortion correction.

Information for distortion correction in accordance with the OpenCV method (distortion correcting information) includes distortion parameters (distortion information), image center coordinates, and focal length (information on the focal length) per pitch (pixel distance).

More specifically, the distortion parameters are distortion correcting coefficients k1, k2, and k3. A coordinate xc in the horizontal direction after distortion is corrected is expressed as follows:

$$xc = x(1 + k1 \times r^2 + k2 \times r^4 + k3 \times r^6) \qquad (1a)$$

where x is a coordinate in the horizontal direction of an image to be corrected, and r is an image height of the image to be corrected.

Similarly, a vertical coordinate yc in the vertical direction after distortion is corrected is expressed as follows:

$$yc = y(1 + k1 \times r^2 + k2 \times r^4 + k3 \times r^6) \qquad (1b)$$

where y is a coordinate in the vertical direction of the image to be corrected.

A focal length per pitch in the horizontal direction fx is expressed as follows:

$$fx = f/px \qquad\qquad (2a)$$

where f is a focal length of the optical system, and px is a pixel size in the horizontal direction.

Similarly, a focal length per pitch in the vertical direction fy is expressed as follows:

$$fy = f/py \qquad\qquad (2b)$$

where py is a pixel size in the vertical direction.

Assume that Cx is an image center coordinate in the horizontal direction, and Cy is an image center coordinate in the vertical direction.

In this embodiment, these parameters are properly calculated within the imaging system 2 and then transmitted. Thereby, good distortion correcting information can be prepared and a recorded data amount can be suppressed.

FIG. 2 is a conceptual diagram of distortion correction. In the distortion correction, distortion uncorrected image DB, which is a distorted image, is multiplied by centrally symmetrical, distortion correcting data DH, which is an inverse magnification of the distortion uncorrected image DB according to a distance from the center. Thereby, it is corrected to an image with less distortion like distortion corrected image DA. Here, the size and position are defined with the distortion uncorrected image DB as the reference resolution and the image center coordinates in the upper left corner of the image as the reference image center coordinates, and the resolution and image center coordinates of the distortion correcting data DH are also configured to match them.

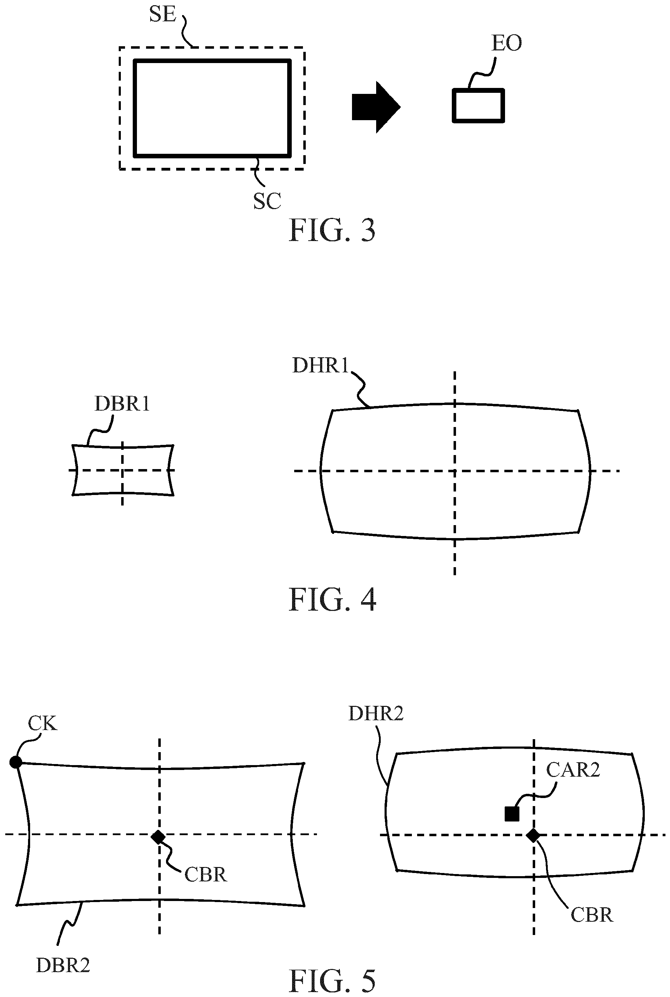

FIG. 3 is a conceptual diagram of the imaging resolution and output resolution. The photographer (user) performs imaging by arbitrarily selecting imaging resolution SC for imageable resolution SE of the image sensor, and arbitrarily selects the output resolution EO after imaging. The imaging resolution SC and output resolution EO are transmitted to the image processing system 6. In a case where the transmitted output resolution EO is different from the resolution of the distortion correcting data, problems will occur in the distortion correction in the image processing system 6.

A description will now be given of two examples in which problems occur in the image processing system 6.

The first example will now be described with reference to FIG. 4. FIG. 4 is a conceptual diagram in a case where a relationship between the focal lengths fx and fy per pitch and the distortion correcting data is improper. The distortion correcting data DHR1 before distortion correction is transmitted at a resolution arbitrarily reduced by the photographer, but since the distortion correcting data DHR1 remains at the reference resolution (before reduction), distortion cannot be corrected correctly in a case where they are multiplied.

The second example will now be described with reference to FIG. 5. FIG. 5 is a conceptual diagram in a case where a relationship between the image center coordinates Cx and Cy and the distortion correcting data is improper. The image center coordinate CBR is defined based on the coordinate CK at the upper left of the distortion uncorrected image DBR2. In a case where the image center coordinate CAR2 of the distortion correcting data DHR2 shifts from the center coordinate CBR, distortion cannot be corrected correctly in a case where they are multiplied.

Thus, in a case where the pixel size changes relatively due to reduction, enlargement, etc., or in a case where the image center coordinates change, the above problems occur if the conventional distortion correction is performed as is.

Accordingly, this embodiment performs processing according to the imaging resolution and output resolution for the focal lengths fx and fy per pitch and the image center coordinates Cx and Cy. Thereby, correct distortion correcting processing can be performed.

The distortion correcting coefficients k1, k2, and k3 and the focal lengths fx and fy per pitch have different values for each zoom position and focus position. Thus, storing them in table format would result in an enormous data amount.

Accordingly, this embodiment performs calculation processing according to the imaging resolution and output resolution within the imaging system 2 and then transmits distortion correcting information. Thereby, a recorded data amount can be suppressed.

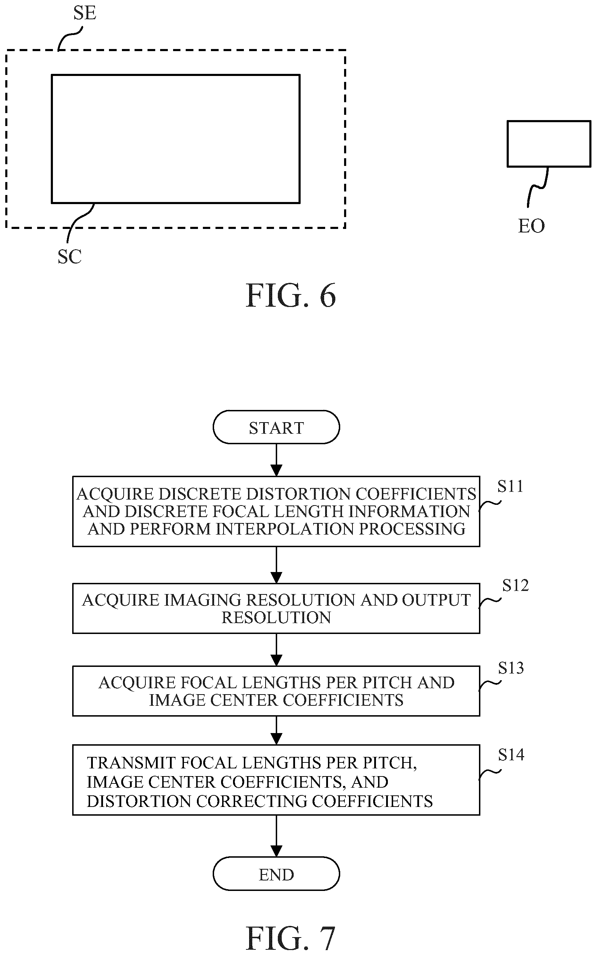

FIG. 6 is a conceptual diagram of the calculation processing according to this embodiment. In FIG. 6, the imageable resolution SE of the image sensor is 4320 pixels, the imaging resolution SC is 3240 pixels, and the output resolution EO is 1080 pixels. Since the resolution is converted to a lower resolution, the pixel size of the output image becomes larger (coarser) relative to the unit size (or unit angle of view). In FIG. 6, the output pixels are reduced by one third from 3240 pixels to 1080 pixels, so the pixel size becomes three times larger (coarser). The pixel size after the relative size has changed in this way is defined as a "converted output pixel size." Using the converted output pixel size for the calculation can properly set the relationship between the output image and the distortion correcting data.

In this embodiment, the second acquiring unit 42 acquires the focal length fx per pitch in the horizontal direction and the focal length fy per pitch in the vertical direction using the following equations (3a) and (3b):

$$fx = f/(\text{converted output pixel size}) \qquad (3a)$$

$$fy = f/(\text{converted output pixel size}) \qquad (3b)$$

In FIG. 6, in a case where the reference pixel size is px, the converted output pixel size pKx is 3px.

The second acquiring unit 42 acquires the image center coordinate Cx in the horizontal direction and the image center coordinate Cy in the vertical direction using the following equations (4a) and (4b):

$$Cx = \text{output resolution}/2 \qquad (4a)$$

$$Cy = \text{output resolution}/2 \qquad (4b)$$

Due to such processing, distortion can be satisfactorily corrected.

The unit of resolution is not limited to pixels, and may be expressed in size or length (mm), etc.

Specific processing methods will be described below for each example.

EXAMPLE 1

FIG. 7 is a flowchart illustrating processing on distortion correcting information according to this example. This flow is started, for example, when the photographer presses the "output button." In step S11, the first acquiring unit 41 acquires discrete distortion coefficients and discrete focal length information and performs interpolation processing. In step S12, the first acquiring unit 41 acquires the imaging resolution and output resolution set by the photographer in the imaging system 2. In step S13, the second acquiring unit 42 acquires the focal lengths per pitch and the image center coordinates according to the imaging resolution and the output resolution acquired in step S12. In step S14, the transmitter 43 transmits the focal lengths per pitch, the image center coordinates, and the distortion coefficients acquired in step S11. The distortion coefficients are not processed by the second acquiring unit 42. The order of steps S11 and S12 may be reversed.

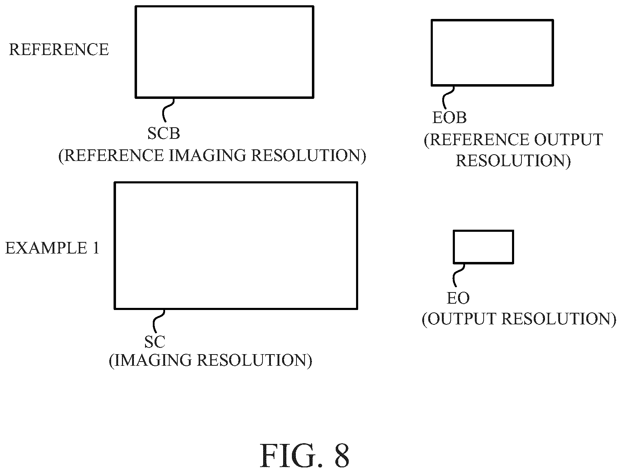

FIG. 8 is a schematic diagram of the resolution in this example. For description convenience, only the horizontal direction will be described as an example. In this example, the first acquiring unit 41 acquires the reference imaging resolution, the reference output resolution, and the reference focal length per pitch, and the second acquiring unit 42 calculates how the output image has changed relative to the reference.

In this example, the reference imaging resolution SCB is 3140 pixels, the reference output resolution EOB is 2160 pixels, and the reference focal length per pitch fxb is 2924 pixels. The imaging resolution SC is 4320 pixels, and the output resolution EO is 1080 pixels. At this time, a reference change rate (=reference output resolution/reference imaging resolution) indicating how much the output resolution changes relative to the imaging resolution at the reference resolution is 0.688 (=2160/3140). An arbitrary change rate (=output resolution/imaging resolution) indicating how much the output resolution changes relative to the imaging resolution at an arbitrary resolution is 0.250 (=1080/4320). A converted output pixel size (=reference change rate/arbitrary change rate) pKx (=(EOB/SCB)/(EO/SC)), which is a pixel size after the relative size changes, is 2.752 (=0.688/0.25).

The second acquiring unit 42 acquires the focal length per pitch fx (=fxb/pKx) as 1063 (=2924/2.752).

The above relationship is expressed as follows:

$$(fxb/fx)\times(EO/EOB)\times(SCB/SC) = 1 \qquad (5)$$

In this example, the following inequality (6) may be satisfied:

$$0.95 < (fxb/fx)\times(EO/EOB)\times(SCB/SC) < 1.05 \qquad (6)$$

Satisfying inequality (6) can provide easy and good distortion correction.

Inequality (6) may be replaced with inequality (6a) below:

$$0.97 < (fxb/fx)\times(EO/EOB)\times(SCB/SC) < 1.03 \qquad (6a)$$

Inequality (6) may be replaced with inequality (6b) below:

$$0.99 < (fxb/fx) \times (EO/EOB) \times (SCB/SC) < 1.01 \qquad (6b)$$

As another configuration, a partial relationship among the output resolution EO, the reference output resolution EOB, the imaging resolution SC, and the reference imaging resolution SCB is arbitrary formed in the table format and used in combination with the above calculations. For example, according to the resolution selected by the user, a value SCB/SC, which is a calculation result of the imaging resolution SC and the reference imaging resolution SCB, may be selected from the table, and the equation (fxb/fx)×(EO/EOB) may be used for remaining processing.

The second acquiring unit 42 acquires the image center coordinate Cx (=EO/2) as 540 (=1080/2).

In this example, the following inequality (7) may be satisfied:

$$0.475 < Cx/EO < 0.525 \qquad (7)$$

Satisfying inequality (7) can provide easy and satisfactory distortion correction.

Inequality (7) may be replaced with inequality (7a):

$$0.485 < Cx/EO < 0.515 \qquad (7a)$$

Inequality (7) may be replaced with inequality (7b):

$$0.495 < Cx/EO < 0.505 \qquad (7b)$$

This example properly calculates the focal lengths per pitch and the image center coordinates, and transmits the calculated focal lengths per pitch and image center coordinates to an external device. Thereby, a recorded data amount can be suppressed and good distortion correction can be achieved.

In this example, the imaging system 2 has a table of the distortion coefficients and focal length information for each of the zoom and focus positions.

The number of distortion correcting coefficients can be set to six or more on OpenCV, but this example performs highly accurate calculations based on the proportional relationship at the pixel level, thus sets the number of coefficients for distortion correction to three, and can suppress the data amount.

EXAMPLE 2

This example will discuss processing on distortion correcting information in a case where the imaging resolution is not changed. This example will discuss only the configuration that is different from that of Example 1, and a description of the common configurations will be omitted.

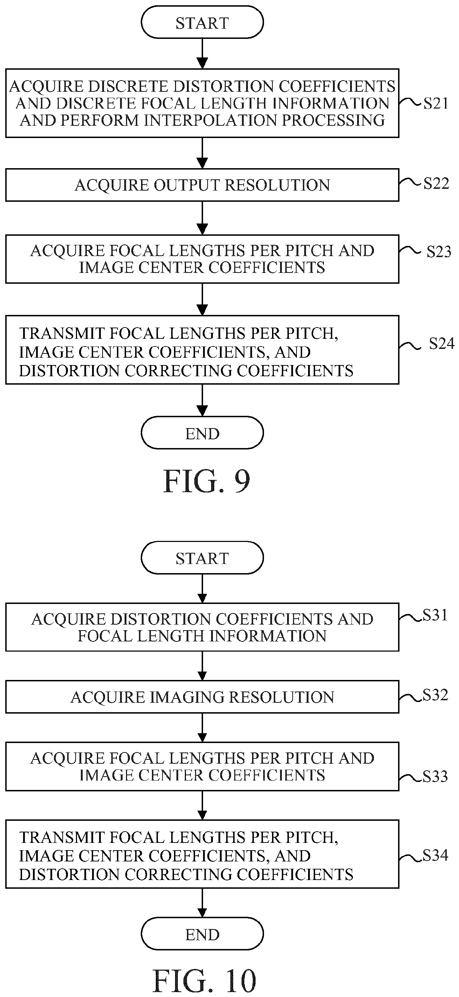

FIG. 9 is a flowchart illustrating processing on distortion correcting information according to this example. This flow is started, for example, when the photographer presses the "output button." In step S21, the first acquiring unit 41 acquires discrete distortion coefficients and discrete focal length information and performs interpolation processing. In step S22, the first acquiring unit 41 acquires the output resolution set by the photographer in the imaging system 2. In step S23, the second acquiring unit 42 acquires the focal lengths per pitch and the image center coordinates according to the output resolution acquired in step S22. In step S24, the transmitter 43 transmits the focal lengths per pitch, the image center coordinates, and the distortion correcting coefficients acquired in step S21. The distortion coefficients are not processed by the second acquiring unit 42. The order of steps S21 and S22 may be reversed.

In this example, the reference output resolution EOB is 2160 pixels, the reference focal length per pitch fxb is 2924 pixels, and the output resolution EO is 1080 pixels. At this time, the converted output pixel size pKx (=EOB/EO) is 2 (=2160/1080).

The second acquiring unit 42 acquires the focal length per pitch fx (=fxb/pKx) as 1462 (=2924/2). The second acquiring unit 42 acquires the image center coordinate Cx (=EO/2) as 540 (=1080/2).

EXAMPLE 3

This example will discuss processing on distortion correcting information in a case where the output resolution is not changed. This example does not acquire discrete distortion coefficients or discrete focal length information or does not perform interpolation processing, and the imaging system 2 acquires distortion coefficients and focal length information in an interpolated state. This example will discuss only the configuration different from that of Example 1, and omit a description of the common configuration.

FIG. 10 is a flowchart illustrating processing on distortion correcting information according to this example. This flow is started, for example, when the photographer presses the "output button." In step S31, the first acquiring unit 41 acquires the interpolated distortion coefficients and focal length information of the optical system. In step S32, the first acquiring unit 41 acquires the imaging resolution set by the photographer in the imaging system 2. In step S33, the second acquiring unit 42 acquires the focal lengths per pitch and the image center coordinates according to the imaging resolution acquired in step S32. In step S34, the transmitter 43 transmits the focal lengths per pitch, the image center coordinates, and the distortion coefficients acquired in step S31. The distortion coefficients are not processed by the second acquiring unit 42. The order of steps S31 and S32 may be reversed.

In this example, the reference imaging resolution SCB is 3140 pixels, and the reference focal length per pitch fxb is 2924 pixels. The imaging resolution SC is 4320 pixels, and the output resolution EO is 2160 pixels. In this case, the converted output pixel size pKx (=SC/SCB) is 1.3758 (=4320/3140).

The second acquiring unit 42 acquires the focal length per pitch fx (=fxb/pKx) as 2125 (=2924/1.3758). The second acquiring unit 42 acquires the image center coordinate Cx (=EO/2) as 1080 (=2160/2).

EXAMPLE 4

This example will discuss processing in a case where the focal lengths per pitch and the image center coordinate have errors. This example will discuss only the configuration different from that of Example 1, and omit a description of the common configurations.

In this example, the reference imaging resolution SCB is 3140 pixels, the reference output resolution EOB is 2160 pixels, and the reference focal length per pitch fxb is 2924 pixels. The imaging resolution SC is 4320 pixels, and the output resolution EO is 1080 pixels.

At this time, the second acquiring unit 42 acquires the focal length per pitch fx as 1015, and the image center coordinate Cx as 565.

(fxb/fx)×(EO/EOB)×(SCB/SC) is 1.047, which satisfies inequality (6), and Cx/EO is 0.523, which satisfies inequality (7). Thus, good distortion correction can be easily achieved.

OTHER EMBODIMENTS

Embodiment(s) of the disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read-only memory (ROM), a storage of distributed computing systems, an optical disc (such as a compact disc (CD), digital versatile disc (DVD), or Blu-ray Disc (BD)™), a flash memory device, a memory card, and the like.

While the disclosure has described example embodiments, it is to be understood that the disclosure is not limited to the example embodiments. The scope of the following claims is to be accorded the broadest interpretation so as to encompass all such modifications and equivalent structures and functions.

Each example can provide a processing apparatus that can prepare good distortion correcting information and suppress a recorded data amount.

**Claims**

1. A processing apparatus (2) comprising:

    a first acquiring unit (41) configured to acquire an imaging resolution and an output resolution, and
    a second acquiring unit (42) configured to acquire information on a focal length of an optical system and center position information on an image according to the imaging resolution and the output resolution.

2. The processing apparatus according to claim 1, further comprising a transmitter (43) configured to transmit the information on the focal length and the center position information to an external device.

3. The processing apparatus according to claim 1 or 2, **characterized in that** the first acquiring unit acquires a reference imaging resolution, a reference output resolution, and information on a reference focal length.

4. The processing apparatus according to claim 3, **characterized in that** the following inequality is satisfied:

$$0.95 < (fxb/fx) \times (EO/EOB) \times (SCB/SC) < 1.05$$

where fx is the information on the focal length, fxb is the information on the reference focal length, SC is the imaging resolution, SCB is the reference imaging resolution, EO is the output resolution, and EOB is the reference output resolution.

5. The processing apparatus according to claim 4, wherein the processing apparatus stores values of SCB/SC in a table format.

6. The processing apparatus according to any one of claims 1 to 5, **characterized in that** the following inequality is satisfied:

$$0.475 < Cx/EO < 0.525$$

where EO is the output resolution, and Cx is the central position information.

7. The processing apparatus according to any one of claims 1 to 6, **characterized in that** the first acquiring unit acquires position information on zoom and focus, and
wherein the second acquiring unit performs interpolation processing for the information on the focal length according to the position information.

8. The processing apparatus according to any one of claims 1 to 7, **characterized in that** the first acquiring unit acquires focal length information and distortion information.

9. The processing apparatus according to claim 8, **characterized in that** the second acquiring unit does not process the distortion information according to the imaging resolution and the output resolution.

10. The processing apparatus according to claim 8, **characterized in that** the distortion information has three or less distortion correcting coefficients.

11. An image pickup apparatus (4) comprising:

the processing apparatus (2) according to any one of claims 1 to 10; and
an image sensor configured to photoelectrically convert an optical image formed by an optical system.

12. The image pickup apparatus according to claim 11, **characterized in that** the first acquiring unit acquires focal length information and distortion information.

13. The image pickup apparatus according to claim 12, **characterized in that** the first acquiring unit acquires the focal length information and the distortion information from a lens apparatus having the optical system.

14. A lens apparatus (3) comprising:

the processing apparatus (2) according to any one of claims 1 to 10; and
an optical system.

15. An imaging system comprising:

the processing apparatus (2) according to any one of claims 1 to 10;

the optical system; and
an image sensor configured to photoelectrically convert an optical image formed by the optical system.

16. An image processing apparatus (6) comprising:

an acquiring unit configured to acquire the information on the focal length and the central position information from the processing apparatus (2) according to any one of claims 1 to 10; and
a processing unit configured to perform processing using the information on the focal length and the central position information.

17. A system comprising:

the imaging system according to claim 15; and
the image processing apparatus (6) according to claim 16.

18. A processing method comprising:

acquiring an imaging resolution and an output resolution; and
acquiring information on a focal length of an optical system and center position information on an image according to the imaging resolution and the output resolution.

19. A program that causes a computer to execute the processing method according to claim 18.

FIG. 1

DISTORTION UNCORRECTED IMAGE

DISTORTION CORRECTING DATA

DISTORTION CORRECTED IMAGE

FIG. 2

FIG. 3

FIG. 4

FIG. 5

FIG. 6

FIG. 7

REFERENCE

SCB
(REFERENCE IMAGING RESOLUTION)

EOB
(REFERENCE OUTPUT
RESOLUTION)

EXAMPLE 1

SC
(IMAGING RESOLUTION)

EO
(OUTPUT RESOLUTION)

FIG. 8

START

ACQUIRE DISCRETE DISTORTION COEFFICIENTS AND DISCRETE FOCAL LENGTH INFORMATION AND PERFORM INTERPOLATION PROCESSING  ~S21

ACQUIRE OUTPUT RESOLUTION  ~S22

ACQUIRE FOCAL LENGTHS PER PITCH AND IMAGE CENTER COEFFICIENTS  ~S23

TRANSMIT FOCAL LENGTHS PER PITCH, IMAGE CENTER COEFFICIENTS, AND DISTORTION CORRECTING COEFFICIENTS  ~S24

END

# FIG. 9

START

ACQUIRE DISTORTION COEFFICIENTS AND FOCAL LENGTH INFORMATION  ~S31

ACQUIRE IMAGING RESOLUTION  ~S32

ACQUIRE FOCAL LENGTHS PER PITCH AND IMAGE CENTER COEFFICIENTS  ~S33

TRANSMIT FOCAL LENGTHS PER PITCH, IMAGE CENTER COEFFICIENTS, AND DISTORTION CORRECTING COEFFICIENTS  ~S34

END

# FIG. 10

## EUROPEAN SEARCH REPORT

**Application Number**

EP 25 16 1796

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/388637 A1 (ISHIKAWA DAISUKE [JP]) 30 November 2023 (2023-11-30) | 1,2,6, 11,14-19 | INV. H04N23/661 |
| Y | * abstract * <br> * figures 2, 4, 5A-B, 6B, 7C * <br> * paragraph [0028] - paragraph [0029] * <br> * paragraph [0031] * <br> * paragraph [0040] - paragraph [0043] * <br> * paragraph [0050] * <br> * paragraph [0052] * <br> * paragraph [0057] * <br> * paragraph [0061] - paragraph [0062] * | 3-5, 7-10,12, 13 | H04N23/663 H04N23/67 H04N23/69 H04N23/81 |
| | ----- | | |
| Y | US 2009/167925 A1 (MURATA TSUKASA [JP]) 2 July 2009 (2009-07-02) | 3-5, 7-10,12, 13 | |
| A | * abstract * <br> * figures 1, 3, 4 * <br> * paragraph [0047] * <br> * paragraph [0092] - paragraph [0093] * <br> * paragraph [0095] - paragraph [0096] * <br> * paragraph [0099] * <br> * paragraph [0195] * | 1,2,6, 11,14-19 | |
| | ----- | | **TECHNICAL FIELDS SEARCHED (IPC)** |
| A | US 2019/356825 A1 (MOTOSHIMA HIROAKI [JP] ET AL) 21 November 2019 (2019-11-21) * abstract * * figures 3, 8 * | 1-19 | H04N |
| | ----- | | |

The present search report has been drawn up for all claims

| Place of search | Date of completion of the search | Examiner |
|---|---|---|
| Munich | 4 June 2025 | Furlan, Silvano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 1796

This annex lists the patent family members relating to the patent documents cited in  the above-mentioned European search report.
The members are as contained in the European Patent Office EDP file on
The European Patent Office is in no way liable for these particulars which are merely given for the purpose of information.

04-06-2025

| Patent document cited in search report | | Publication date | Patent family member(s) | | Publication date |
|---|---|---|---|---|---|
| US 2023388637 | A1 | 30-11-2023 | JP | 2023176702 A | 13-12-2023 |
| | | | US | 2023388637 A1 | 30-11-2023 |
| US 2009167925 | A1 | 02-07-2009 | EP | 1959676 A1 | 20-08-2008 |
| | | | JP | 4893629 B2 | 07-03-2012 |
| | | | JP | WO2007066459 A1 | 14-05-2009 |
| | | | US | 2009167925 A1 | 02-07-2009 |
| | | | WO | 2007066459 A1 | 14-06-2007 |
| US 2019356825 | A1 | 21-11-2019 | JP | 7052550 B2 | 12-04-2022 |
| | | | JP | 2019201346 A | 21-11-2019 |
| | | | US | 2019356825 A1 | 21-11-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008295097 A

- JP 2023176702 A